Europäisches Patentamt

(19) European Patent Office

Office européen des brevets

(11) Publication number: **0 007 797**
**B1**

# (12) EUROPEAN PATENT SPECIFICATION

(45) Date of publication of patent specification: **22.07.81**

(51) Int. Cl.³: **A 01 K 87/06**

(21) Application number: **79301477.0**

(22) Date of filing: **25.07.79**

(54) **A reel seat for a fishing rod.**

(30) Priority: **27.07.78 JP 104548/78**
**27.07.78 JP 104549/78**

(43) Date of publication of application:
**06.02.80 Bulletin 80/3**

(45) Publication of the grant of the European patent:
**22.07.81 Bulletin 81/29**

(84) Designated Contracting States:
**DE FR IT NL**

(56) References cited:
**FR - A - 1 133 203**
**GB - A - 1 339 229**
**US - A - 2 479 952**
**US - A - -3 461 594**

(73) Proprietor: **SHIMANO INDUSTRIAL COMPANY LIMITED**
**77, 3-cho Oimatsu-cho Sakai-shi**
**Osaka (JP)**

(72) Inventor: **Sato, Jun**
**210-8, Kitamachi**
**Hikiso Sakai-shi, Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

A reel seat for a fishing rod

This invention relates to a reel seat for use in mounting a fishing reel on a fishing rod with the leg of the fishing reel held along the rod, said reel seat comprising:

(a) a seat body for mounting longitudinally along the fishing rod said seat body having on its upper face at one end a plurality of grooves each of which extends laterally of the seat body and which are arranged longitudinally along the seat body,

(b) a stationary socket fixed at one end of said seat body for receiving one end of the reel leg,

(c) a movable socket which is positioned at the other end of said seat body and opposite to said stationary socket for receiving the other end of the reel leg, said movable socket being supported on said seat body so as to be slidable lengthwise thereof,

(d) a leaf spring having an engagement portion for engagement with a said groove on said seat body and a control member mounted for movement of said leaf spring into and out of engagement with the grooves.

Such a reel seat is disclosed in U.S. Patent No. 3,461,594. British Patent No. 1,339,229 describes a fishing reel clamp having a movable socket operating with a toggle action.

Generally this kind of reel seat holds the reel leg in such a manner that the reel leg is inserted at its one end into the stationary socket and sleeved at the other end by the slidably movable socket and the control member is operated to bias toward the seat body a retaining leaf spring supported to the movable holder so that the leaf spring is fitted at its bent end into a recess at the seat body, thereby retaining the movable socket to the seat body, thus holding the reel leg between both the holders.

When fixing the reel leg by operating the control segment as aforegoing, the movable socket tends to move apart from the stationary socket. Even if this does not occur, the leaf spring is often engaged with the incorrect groove so that the movable socket tends to move away from the stationary socket. As a result, the reel leg, even when it is supposedly fixed between the two sockets, is still relatively unsteady. This makes it difficult to correctly operate the fishing reel during the delicate operations involved in fishing.

This invention is intended to overcome the above problems and it is an object of the invention to provide a reel seat capable of ensuring steady fixing of the reel leg between both the stationary and movable sockets.

The present invention provides a retainer slidably mounted on the seat body separately from the movable socket, said control member and said leaf spring being mounted on said retainer for securing it on the seat body in a predetermined position when said leaf spring is engaged with a said groove, connection means being provided between the control member on the retainer and the movable socket for longitudinal movement of the movable socket towards the stationary socket when the control member is operated to secure the retainer in position on the seat body.

An advantage provided by the present invention is that when the control member is operated to engage the leaf spring with one of the grooves on the seat body and securely position the retainer on the sheet body, the movable socket is forcibly pushed towards the stationary socket by means of the connection means so that the reel leg is firmly gripped between the two sockets.

In other words, the invention is directed to provide the retainer at the reel seat having the stationary socket and movable socket, the retainer being separate therefrom and having the retaining leaf spring and control member for the purpose of fixing the movable socket in position at the reel seat. A connection means conveniently in the form of an inter-connecting member is inserted between the movable socket and the control member at the retainer, whereby when the control member is operated to hold the retainer, the swinging motion of control member is used to forcibly push the movable socket toward the stationary socket to thereby fix the reel leg steadily between both the holders.

These and other objects and features of the invention will become more apparent from the following description of some preferred specific embodiments thereof illustrated with reference to the accompanying drawings, in which like reference numbers are used to denote like parts in the various embodiments and in which:

Figure 1 is a plan view of a first embodiment of the invention;

Figure 2 is a perspective view of the principal portion thereof;

Figure 3 is a sectional view of the principal portion shown in Figure 2;

Figure 4 is a sectional view of the principal portion, in which the control segment is operated from the condition in Figure 3;

Figures 5 and 6 are sectional views of two modified embodiments, corresponding to the view of Figure 3;

Figure 7 is a plan view of the modified embodiment of Figure 6;

Figure 8 is a perspective view of a fourth, modified, embodiment;

Figure 9 is a partial sectional view of the embodiment shown in Figure 8;

Figure 10 is a plan view of a fifth, modified, embodiment;

Figure 11 is a sectional view of the principal portion of the embodiment shown in Figure 10; and

Figure 12 is a sectional view of the principal portion, showing the control segment operated from the condition shown in Figure 11.

The drawings show a seat body for mounting on a fishing rod (not shown). At an intermediate portion (across the width of the seat body 1) is provided a recess 11 extending longitudinally of the body. At one lengthwise side of the recess 11 are provided a number of grooves 12 which extend in a direction across the width of the recess 11 and are arranged in a direction along the length thereof. The seat body 1 is formed of a pressed metallic plate having a section corresponding generally to an inverted U-shape (or possible an M-shape). At both lengthwise ends of the seat body 1 are provided tongues 13 and 14 by means of which a reel seat may be mounted on the fishing rod. The tongues 13 and 14 abut against the outer periphery of the fishing rod in use of the seat body and may be fixed to the rod by conventional fixing means, such as stiff string and adhesives. When the reel seat is fixed onto the rod, both of the lengthwise side edges of the inverted generally U-shaped body 1 are spaced from the rod. Such constructions of reel seats are already well-known and widely used, and will accordingly be well understood to those skilled in the art without further detailed description.

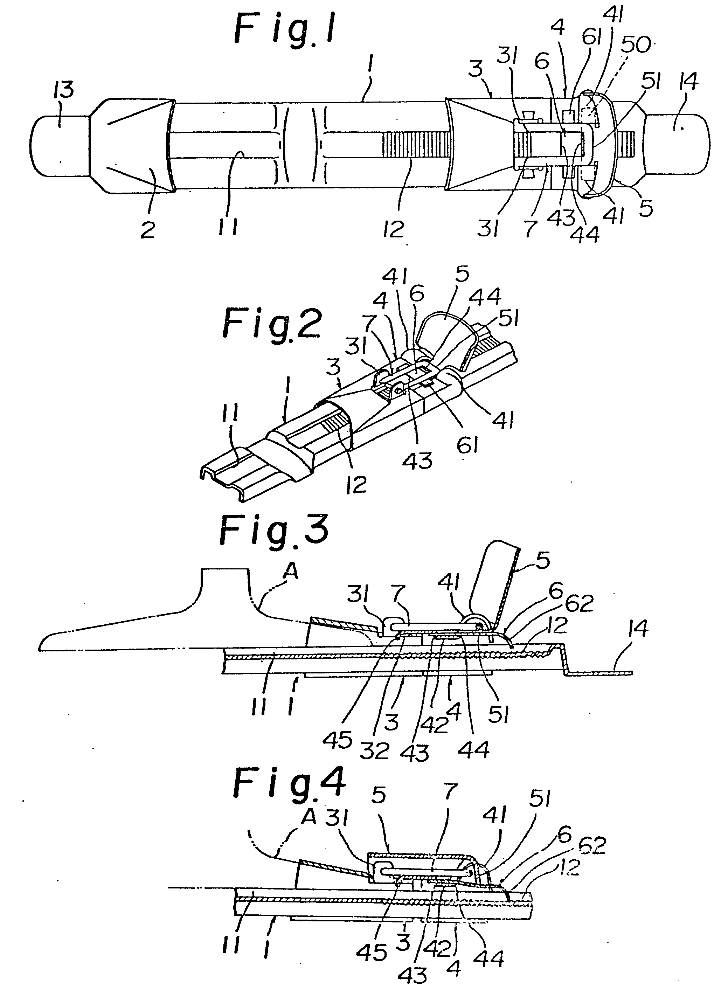

A stationary socket 2 is fixed at one lengthwise end of the seat body 1. The stationary socket 2 holds one lengthwise end of a reel leg A (see Figure 3) extending lengthwise of the fishing rod (not shown), and is formed of a pressed metallic plate to be caulked at the side edges of the inverted U-shape of the body seat.

A movable socket 3, is supported at the other lengthwise end of the seat body 1 so as to be slidable lengthwise thereon and opposite the stationary socket 2. The movable socket 3 is formed of a pressed metallic plate and bent at both side edges to abut against both the side edges of the inverted U-shaped seat body 1 and extend around the bottom side edges of the seat body 1 with inturned edges so as to be slidable along the seat body 1.

A retainer 4 separate from the movable socket 3 serves to retain the movable socket 3 in position on the seat body 1, is formed of a pressed metallic plate, and overlies the seat body 1 so as to be slidable thereon.

As best seen from Figure 2, the retainer 4 has at both widthwise sides a pair of raised portions 41. The raised portions 41 are open at their inward opposed faces so that a control member 5 may be pivotally mounted for pivoting at the open ends. At a lengthwise intermediate portion of the retainer 4 is provided a recess 42. The recess 42 is provided at both longitudinal (relative to the seat body) ends with slots 43 and 44 through which a leaf spring 6 extends for mounting therebetween.

The leaf spring 6 has at a substantially intermediate (along its length) portion a pair of wings 61 extending laterally outwards, the wings 61 being fitted into the recess 42. The portions of the leaf spring 6 just before and just behind the wings 61 are disposed through the slots 43 and 44 and an engagement or tail portion 62 which extends beyond the slot 44, i.e. in a direction away from the fixed socket 2, in use of the reel seat, is bent down towards the seat body 1, the bent tail portion 62 being engaged with one of the grooves 12 (see Figure 4). The control member 5, which holds the leaf spring 6 engaged with one of the grooves 12 is pivotally mounted in the raised portions 41 by means of a pair of ears 50 respectively, and an end of the pivoting control member 5 corresponding to the tail portion 62 of the leaf spring 6 is bent into a generally L-shaped form to thereby form a contact end 51. The control member 5 is turned in the direction of closing (counterclockwise in the drawings) to force the contact end 51 against the leaf spring 6 and in turn press the leaf spring 6 so that it is elastically deformed to resiliently engage at its bent tail portion 62 with one of the grooves 12, thus fixing the retainer 4 in a given position.

A connection means in the form of an interconnecting member 7 inserted between the movable socket 3 and the control member 5 is pivotally mounted on the retainer 4. The interconnecting member 7 converts the pivoting motion of the control member 5 in the closing direction thereof into a rectilinear motion to thereby push the movable socket 3 and forcibly move it towards the stationary socket 2. In detail the interconnecting member 7 shown in Figures 1 to 4 is formed of a wire rod bent into a generally U-shaped form. The tips of the legs of the interconnecting member 7 are connected non-rotatably to a pair of supports 31 projecting from the movable socket 3 and the apex of the U-shape is contacted with the contact end 51 of the control member 5. Hence, the displacement of the contact end 51 toward the stationary socket 2 when the control member 5 pivots in its closing direction, is utilized to allow the interconnecting member 7 to travel in rectilinear fashion towards the stationary socket 2, so that the movable socket 3 is urged towards it due to the fixed point of the engagement between the bent tail portion 62 of the leaf spring 6 with one of the grooves 12.

In addition, as may be seen from Figures 3 and 4, the retainer 4 is provided at one end — at the left side in the drawings — with an extension 45 extending towards the movable socket 3. The extension 45 is connected at its free end with the movable socket 3 through a slot 32 therein so that the movable socket 3 may follow the retainer's longitudinal movement. Such a construction facilitates removal of the reel leg A from the reel seat.

The application and operation of the above-described reel seat will now be detailed.

Firstly, when a fishing reel is mounted on the reel seat, the reel leg *A* thereof is inserted with one of its ends into the stationary socket 2; the movable socket 3 together with the retainer 4 is slidably moved towards the stationary socket 2 along the seat body 1 so as to fit onto the other end of reel leg *A*; the control member being in its open position at this stage; the control member 5 is then pivoted towards its closed position (counterclockwise in the drawings), thereby allowing the contact end 51 of the control member 5 to contact with the leaf spring 6 and push it towards the seat body 1; the leaf spring 6 is engaged at its bent tail portion 62 with one of the grooves 12 on the seat body 1; and the retainer 4 is held in position thereby. In this instance, the interconnecting member 7 abuts against the contact end 51 of the control member 5 and is pushed towards the stationary socket 2 following the pivoting motion of the control member 5 in its closing direction, whereby the movable socket 3 firmly grips the other end of the reel leg *A*, thus ensuring a firm fixing of the reel leg *A* between the two sockets 2, 3.

In addition, the invention is not limited to the above-described construction, but may be improved and/or modified with changes in design, for example as follows:

1) The interconnecting member 7, which is inserted between the movable socket 3 and the control member 5 at the retainer 4, is pivoted at one end on the control member 5 and contacts at the other end with the movable socket 3.

2) The interconnecting member 7 is pivoted at both ends thereof on the movable socket 3 and control member 5 respectively.

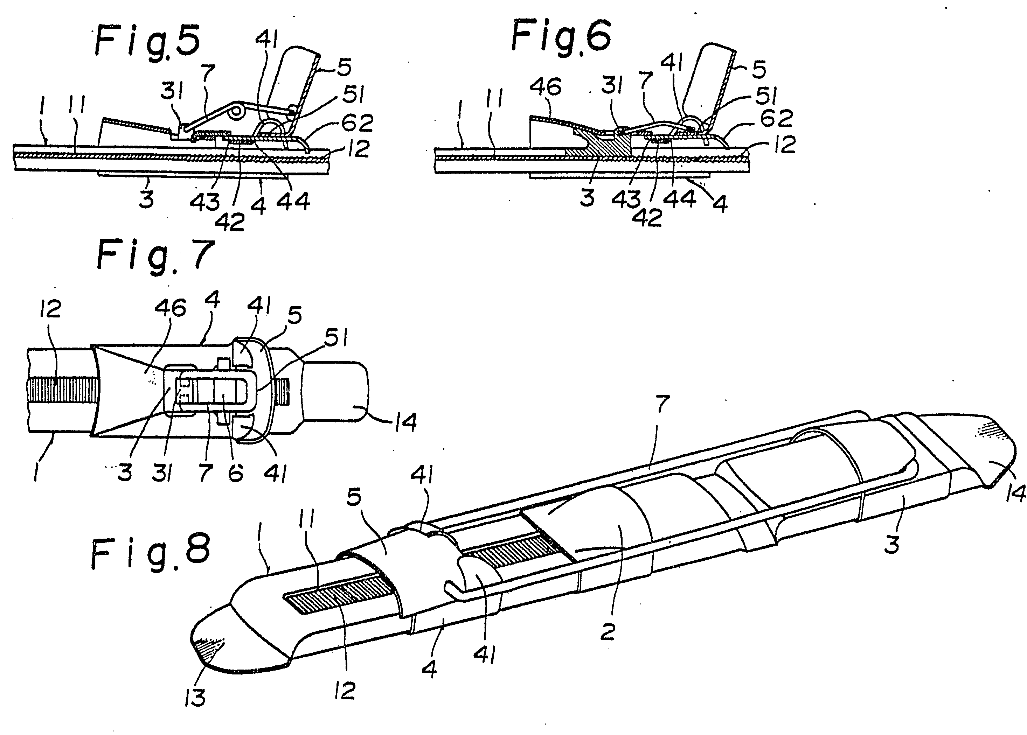

3) The interconnecting member 7 is constituted by a torsion spring as shown in Figure 5 and is pivoted on the movable socket 3 and control segment 5 respectively.

4) The movable socket 3 is formed in a block of synthetic resin or plastics material and a hood 46 is provided on the retainer 4 in order to cover the movable socket 3 so that the movable socket 3 may slide longitudinally along the seat body 1 within the hood 46 (see Figures 6 and 7).

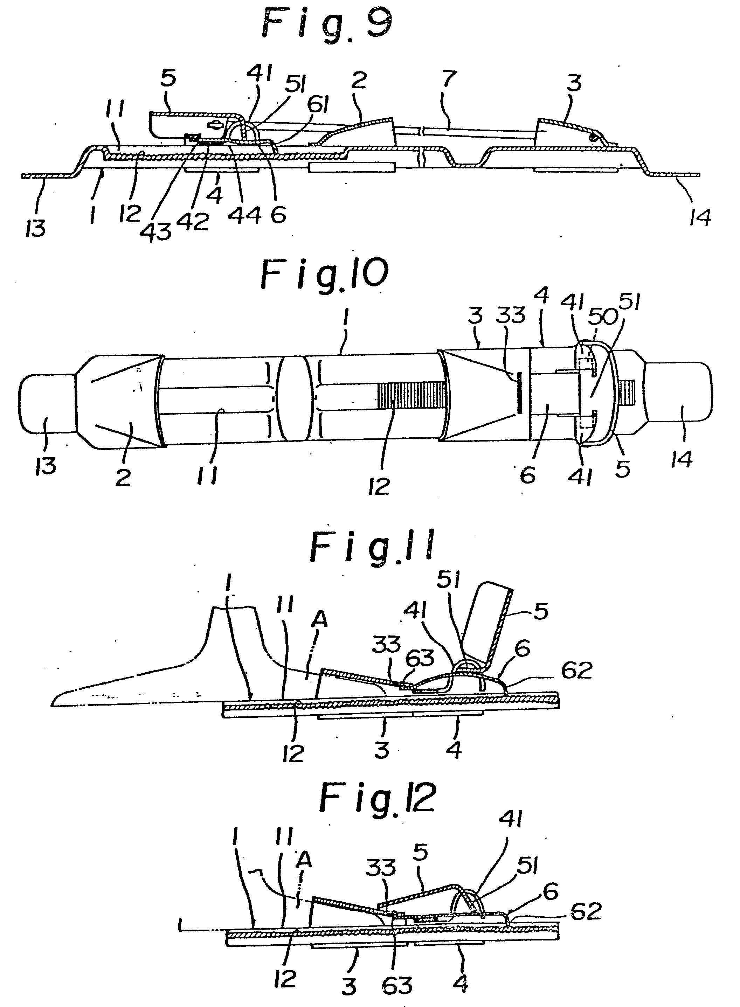

5) The retainer 4 is positioned on the side of the stationary socket 2 remote from the movable socket 3, i.e. with the stationary socket 2 inbetween the movable socket 3 and the retainer 4 as shown in Figures 8 and 9 and the interconnecting member 7 extending between the retainer 4 and the movable socket 3 being necessarily made longer and pivoted on the movable socket 3 and the control member 5 at the retainer 4 respectively.

6) The leaf spring 6 supported on the retainer 4 as shown in Figures 10 to 12, is bent upwardly as shown in Figure 11. The leaf spring 6 has a connection portion 63 which provides the connection means for connecting the movable socket 3 and retainer 4. In this particularly advantageous embodiment no separate interconnecting member is required, thereby simplifying the construction of reel seat. In addition, the leaf spring 6 is connected with the movable socket 3 in such a manner that a slot 33, which is provided in the movable socket 3 and extends widthwise thereof, is engaged with the connection portion in the form of an upwardly bent end 63 of the leaf spring 6. In this connection, the bent end 63 of the leaf spring 6 may merely contact the rear end of movable socket 3, or the end of leaf spring 6 may be fixed, e.g. by soldering.

In the above construction shown in Figures 10 to 12, when the control member 5 is operated in its closing direction (counter-clockwise in the drawings) from the condition in Figure 11 to that in Figure 12, the leaf spring 6 is deformed flat as shown in Figure 12 and its bent tail portion 62 is held engaged with one of the grooves 12. As a result, the leaf spring 6 becomes longitudinally extended compared with its free condition as shown in Figure 11, whereby the movable socket 3 is pushed towards the stationary socket 2 to reliably grip the reel leg *A* in the same way as in the former embodiments.

7) The seat body 1 is formed as a pipe instead of in the form of a channel with an inverted generally U-shaped section.

As will be clearly understood from the above description, the reel seat of the invention is provided with a retainer separate from the movable socket, the retainer holding the movable socket in a predetermined position lengthwise of the seat body, and having a control member and a leaf spring. The pivoting motion of the control member is converted into a rectilinear motion which is transmitted to the movable socket optionally with the aid of an interconnecting member, so that the movable socket is pushed towards the stationary socket thanks to the retainer secured to the seat body by the leaf spring engaged therewith. Hence, the fishing reel leg can be reliably and stably fixed between the stationary and movable sockets.

**Claims**

1. A reel seat for use in mounting a fishing reel on a fishing rod with the leg of the fishing reel held along the rod, said reel seat comprising:

(a) a seat body (1) for mounting longitudinally along the fishing rod, said seat body (1) having on its upper surface at one end a plurality of grooves (12) each of which extends laterally of said seat body (1) and which are arranged longitudinally along the seat body (1),

(b) a stationary socket (2) fixed at one end of said seat body (1) for receiving one end of the reel leg (*A*),

(c) a movable socket (3) which is positioned at the other end of said seat body (1) and opposite to said stationary socket (2) for receiving the other end of the reel leg (A), said movable socket (3) being supported on said seat body (1) so as to be slidable lengthwise thereof,

(d) a leaf spring (6) having an engagement portion (62) for engagement with a said groove (12) on said seat body (1) and a control member (5) mounted for movement of said leaf spring (6), into and out of engagement with the grooves (12),

characterized in that;

a retainer (4) is slidably mounted on the seat body (1) separately from the movable socket (3), said control member (5) and said leaf spring (6) being mounted on said retainer (4) for securing it on the seat body (1) in a predetermined position when said leaf spring (6) is engaged with a said groove (12), connection means (7,6) being provided between the control member (5) on the retainer (4) and the movable socket (3) for longitudinal movement of the movable socket (3) towards the stationary socket (2) when the control member (5) is operated to secure the retainer (4) in position on the seat body (1).

2. A reel seat according to Claim 1 in which the leaf spring (6) is provided with a connection portion (63) connected to the movable socket (3) to provide said connection means (6) between the retainer (4) and the movable socket (3), and wherein said leaf spring (6) has an upwardly curved portion disposed so that operation of the control member (5) to secure the retainer (4) in position with the engagement portion (62) of the leaf spring (6) engaged with a groove (12), produces longitudinal displacement of the connection portion (62) of the leaf spring (6) and the movable socket (3) connected thereto relative to the retainer (4) and towards the stationary socket (2).

3. A reel seat according to Claim 1 in which the connection means comprises an interconnecting member (7) having at least one end connected to a respective one of said control member (5) on said retainer (4) and said movable socket (3) and disposed so that the movable socket (3) is longitudinally displaced relative to the retainer (4) towards the stationary socket (2) when the control member (5) is operated to secure the retainer (4) in position on the seat body (1).

4. A reel seat according to Claim 3, wherein said interconnecting member (7) for connecting said retainer (4) and movable socket (3) comprises a wire rod (7) and has its other end disposed for contact with the other of said movable socket (3) and control member (5) on said retainer (4).

5. A reel seat according to Claim 3, wherein said interconnecting member (7) comprises a torsion spring and is pivotally connected at one end thereof to said movable socket (3) and at the other end to said control member (5) on said retainer (4).

6. A reel seat according to any one of Claims 1 to 3 wherein said retainer (4) is positioned on the side of the movable socket (3) remote from the stationary socket (2) with the movable socket (3) positioned in between said retainer (4) and said stationary socket (2) and the retainer (4) substantially adjacent said movable socket (3).

7. A reel seat according to Claim 3 or Claim 4, wherein said retainer (4) is positioned on the side of the stationary socket (2) remote from the movable socket (3) with the stationary socket (2) positioned in between said retainer (4) and said movable socket (3), said interconnecting member (7) extending between said retainer (4) and said movable socket (3) for movement of the movable socket (3) when the control member (5) is operated to secure said retainer (4) in position.

**Patentansprüche**

1. Ein Rollensitz zur Verwendung bei der Montage einer Angelrolle auf einer Angelrute, wobei der Schenkel der Angelrolle an der Rute entlang gehalten wird und der besagte Rollensitz besteht aus:

(a) einem Sitzkörper (1) zur Längsmontage an der Angelrute entlang, wobei besagter Sitzkörper (1) auf seiner oberen Fläche an einem Ende eine Mehrzahl von Nuten (12) aufweist, die sich alle quer zu dem besagten Sitzkörper (1) ausdehnen und die in Längsrichtung an dem Sitzkörper (1) entlang angeordnet sind,

(b) einer ortsfesten Muffe (2), die an einem Ende des besagten Sitzkörpers (1) befestigt ist, um ein Ende des Rollenschenkels (A) aufzunehmen,

(c) einer beweglichen Muffe (3), die an dem anderen Ende des besagten Sitzkörpers (1) und gegenüber der besagten ortsfesten Muffe (2) in Stellung gebracht ist, um das andere Ende des Rollenschenkels (A) aufzunehmen, wobei die besagte bewegliche Muffe (3) so auf den besagten Sitzkörper (1) aufgelagert ist, daß sie der Länge nach verschiebbar ist,

(d) einer Blattfeder (6), die einen Eingriffteil (62) zum Eingreifen in eine besagte Nut (12) an dem besagten Sitzkörper (1) besitzt und ein Steuerorgan (5), das für die Bewegung der besagten Blattfeder (6) in und aus dem Eingriff in die Nuten (12) montiert ist,

dadurch charakterisiert, daß

ein Haltebügel (4) verschiebbar auf dem Sitzkörper (1) getrennt von der beweglichen Muffe (3) montiert ist, wobei das besagte Steuerorgan (5) und die besagte Blattfeder (6) auf besagtem Haltebügel (4) montiert sind, um ihn auf dem Sitzkörper (1) in einer vorherbestimmten Stellung festzusetzen, wenn besagte Blattfeder (6) in eine besagte Nut (12) eingerückt ist und wobei Verbindungsmittel (7, 6) vorgesehen sind zwischen dem Steuerorgan (5) auf dem Haltebügel (4) und der beweglichen Muffe (3) für die Längsbewegung der beweglichen Muffe (3) zu der ortsfesten Muffe (2), wenn das Steuerorgan (5) betätigt wird, um den Haltebügel (4) in der Position auf dem Sitzkörper (1) festzusetzen.

2. Ein Rollensitz gemäß Anspruch 1, in dem die Blattfeder (6) mit einem Verbindungsteil (63) versehen ist, der mit der beweglichen Muffe (3) verbunden ist, um besagtes Verbindungsmittel (6) zwischen dem Haltebügel (4) und der beweglichen Muffe (3) bereitzustellen, und worin besagte Blattfeder (6) einen nach oben gebogenen Teil so angeordnet hat, daß Betätigung des Steuerorgans (5) zwecks Festsetzung des Haltebügels (4) in Position mit dem Eingriffteil (62) der Blattfeder (6), der in eine Nut (12) eingerückt ist, Längsverschiebung des Verbindungsteils (62) der Blattfeder (6) und der damit verbundenen beweglichen Muffe (3) verursacht in Bezug auf den Haltebügel (4) und in Richtung der ortsfesten Muffe (2).

3. Ein Rollensitz gemäß Anspruch 1, worin das Verbindungsmittel ein Zwischenglied enthält, von dem zumindest ein Ende mit einem entsprechenden Ende des besagten Steuerorgans (5) auf besagtem Haltebügel (4) und besagter beweglicher Muffe (3) verbunden und so angeordnet ist, daß die bewegliche Muffe (3) in Bezug auf den Haltebügel (4) in Längsrichtung zu der ortsfesten Muffe (2) hin verschoben wird, wenn das Steuerorgan (5) betätigt wird, um den Haltebügel (4) in der Position auf dem Sitzkörper (1) festzusetzen.

4. Ein Rollensitz gemäß Anspruch 3, worin besagtes Zwischenglied (7) zur Verbindung des besagten Haltebügels (4) und der beweglichen Muffe (3) einen Walzdraht (7) enthält und sein anderes Ende für den Kontakt mit dem anderen Ende der besagten beweglichen Muffe (3) und des Steuerorgans (5) auf besagtem Haltebügel (4) angeordnet ist.

5. Ein Rollensitz gemäß Anspruch 3, worin das besagte Zwischenglied (7) eine Drehstabfeder enthält und an einem Ende dieser Feder drehbar mit der besagten beweglichen Muffe (3) und am anderen Ende mit dem besagten Steuerorgan (5) auf dem besagten Haltebügel (4) verbunden ist.

6. Ein Rollensitz gemäß einem der Ansprüche 1 bis 3, worin der besagte Haltebügel (4) auf der Seite der beweglichen Muffe (3) in die Stellung gebracht ist, die weit entfernt von der ortsfesten Muffe (2) liegt, wobei die bewegliche Muffe (3) in Stellung ist zwischen dem besagten Haltebügel (4) und der besagten ortsfesten Muffe (2) und der Haltebügel (4) wesentlichen in der Nähe der beweglichen Muffe (3).

7. Ein Rollensitz gemäß Anspruch 3 oder Anspruch 4, worin der besagte Haltebügel (4) an der Seite der ortsfesten Muffe (2) in Stellung ist, die von der beweglichen Muffe (3) entfernt liegt, wobei die ortsfeste Muffe (2) in Stellung zwischen dem besagten Haltebügel (4) und der besagten beweglichen Muffe (3) ist und das besagte Zwischenglied (7) sich zur Bewegung der beweglichen Muffe (3) zwischen dem besagten Haltebügel (4) und der beweglichen Muffe (3) erstreckt, wenn das Steuerorgan (5) betätigt wird, um den besagten Haltebügel (4) in der Stellung festzusetzen.

**Revendications**

1. Un siège de moulinet, prévu pour le montage d'un moulinet de canne à pêche sur la canne elle-même, avec le pied du moulinet s'appuyant le long de la canne, ledit siège de moulinet comprenant:

(a) un corps de siège (1) à être monté longitudinalement le long de la canne à pêche, ledit corps de siège (1) ayant sur sa surface supérieure, à l'une de ses extrémités, une série de rainures (12); chacune de ces rainures s'étend dans le sens latéral dudit corps de siège (1), et est disposé dans le sens longitudinal le long de celui-ci.

(b) un emboîtement fixe (2) monté à l'une des extrémités dudit corps de siège (1), pour recevoir l'une des extrémités du pied du moulinet (A),

(c) un emboîtement mobile (3) situé à l'autre extrémité dudit corps de siège (1) et à l'opposé dudit emboîtement fixe (2), pour recevoir l'autre extrémité du pied de moulinet (A), ledit emboîtement mobile (3) étant supporté sur ledit corps de siège (1) de façon à pouvoir y glisser dans le sens de la longueur,

(d) un ressort à lames (6) ayant une partie de prise (62) pour le faire s'engrener dans l'une desdites rainures (12) sur ledit corps de siège (1), et un élément de commande (5) monté pour déplacer ledit ressort à lames (6) en l'engrenant ou en le désengrenant des rainures (12),

se caractérisant pair le fait que:

Un arrêtoir (4) est monté d'une manière coulissante sur le corps du siège (1), séparément de l'emboîtement mobile (3), ledit élément de commande (5) et ledit ressort à lames (6) étant montés sur ledit arrêtoir (4) afin de le fixer sur le corps du siège (1), dans une position prédéterminée, lorsque ledit ressort à lames (6) est engrené dans l'une desdites rainures (12); des moyens de connection (7,6) sont prévus entre l'élément de commande (5) sur l'arrêtoir (4) et l'emboîtement amovible (3) de façon à ce que celui-ci puisse avoir un mouvement longitudinal vers l'emboîtement fixe (2) lorsque l'élément de commande (5) est actionné pour fixer l'arrêtoir (4) en position sur le corps de siège (1).

2. Un siège de moulinet, conformément à la Revendication 1, dans lequel le ressort à lames (6) est muni d'une partie de connexion (63) reliée à l'emboîture mobile (3) pour procurer lesdits moyens de connexion (6) entre l'arrêtoir (4) et l'emboîtement mobile (3), et dans lequel ledit ressort à lames est pourvu d'une partie courbée vers le haut et placée de façon à ce que l'actionnement de l'élément de commande (5), pour fixer l'arrêtoir (4) en position avec la partie d'engrenage (62) du ressort à lames (6) engrené dans une rainure (12), produise un déplacement longitudinal de la partie de connexion (62) du ressort à lames (6) et de l'emboîtement mobile (3) qui y est accouplé, par rapport à l'arrêtoir (4) et en direction de l'emboîtement fixe (2).

3. Un siège de moulinet, conformément à la Revendication 1, dans lequel les moyens de connexion comportent un élément d'interconnexion (7) ayant au moins l'une de ses extrémités connectée à une extrémité respective dudit élément de contrôle (5) sur ledit arrêtoir (4) et ledit emboîtement mobile (3), et disposé de façon à ce que l'emboîtement mobile (3) se déplace longitudinalement par rapport à l'arrêtoir (4) en direction de l'emboîtement fixe (2) lorsque l'élément de contrôle (5) est actionné pour fixer l'arrêtoir (4) en position sur le corps du siège (1).

4. Un siège de moulinet, conformément à la Revendication 3, dans lequel ledit élément d'interconnexion (7) pour connecter ledit arrêtoir (4) et l'emboîtement mobile (3) comporte une tige métallique (7) et a son extrémité opposée adaptée de façon à être mise en contact avec l'autre extrémité dudit emboîtement mobile (3), et avec l'élément de commande (5) sur ledit arrêtoir (4).

5. Un siège de moulinet, conformément à la Revendication 3, dans lequel ledit élément d'interconnexion (7) comporte un ressort de torsion et se trouve connecté à un pivot à une extrémité du ressort, au dit emboîtement mobile (3) et à l'autre extrémité au dit élément de commande (5) sur ledit arrêtoir (4).

6. Un siège de moulinet, conformément à l'une quelconque des Revendications 1 à 3, dans lequel ledit arrêtoir (4) est positionné du côté de l'emboîtement mobile (3) qui se trouve loin de l'emboîtement fixe (2), l'emboîtement mobile (3) se trouvant ainsi entre ledit arrêtoir (4) et ledit emboîtement fixe (2), et l'arrêtoir (4) se trouvant sensiblement adjacent au dit emboîtement mobile (3).

7. Un siège de moulinet, conformément aux Revendications 3 ou 4, dans lequel ledit arrêtoir (4) est positionné sur le côté de l'emboîtement fixe (2) se trouvant éloigné de l'emboîtement mobile (3), avec l'emboîtement fixe (2) se trouvant entre ledit arrêtoir (4) et ledit emboîtement mobile (3), ledit élément d'interconnexion (7) s'étendant entre ledit arrêtoir (4) et ledit emboîtement mobile (3), pour que l'emboîtement mobile (3) puisse se déplacer lorsque l'élément de commande (5) est actionné pour fixer l'arrêtoir (4) en position.

Fig.1

Fig.2

Fig.3

Fig.4

Fig.5

Fig.6

Fig.7

Fig.8

# Fig.9

# Fig.10

# Fig.11

# Fig.12